(19) Europäisches Patentamt / European Patent Office / Office européen des brevets

(11) **EP 4 293 076 B1**

(12) **EUROPEAN PATENT SPECIFICATION**

(45) Date of publication and mention of the grant of the patent:
**02.04.2025 Bulletin 2025/14**

(21) Application number: **22179598.2**

(22) Date of filing: **17.06.2022**

(51) International Patent Classification (IPC):
*C08L 7/00* (2006.01)   *C08L 33/04* (2006.01)
*C08K 3/06* (2006.01)   *C08K 5/09* (2006.01)

(52) Cooperative Patent Classification (CPC):
(C-Sets available)
**C08L 7/00; B60C 1/00; B60C 1/0016**    (Cont.)

(54) **SELF-HEALING RUBBER COMPRISING A POLY(GLYCEROLMONOMETHACRYLATE) BORONIC ESTER COMPLEX**

SELBSTHEILENDER KAUTSCHUK MIT EINEM POLY(GLYCERINMONOMETHACRYLAT)-BORONSÄUREESTER-KOMPLEX

CAOUTCHOUC AUTOCICATRISANT COMPRENANT UN COMPLEXE D'ESTER BORONIQUE DE POLY(GLYCÉROLMONOMÉTHACRYLATE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.12.2023 Bulletin 2023/51**

(73) Proprietor: **BRIDGESTONE CORPORATION**
**Chuo-ku**
**Tokyo 104-8340 (JP)**

(72) Inventors:
• **Di Ronza, Raffaele**
  **00128 Roma (IT)**
• **Bernal Ortega, Maria Del Mar**
  **00128 Roma (IT)**
• **Morishita, Yoshihiro**
  **Tokyo, 187-8531 (JP)**
• **Wemyss, Alan**
  **Coventry, CV4 7AL (GB)**
• **Wan, Chaoying**
  **Coventry, CV4 7AL (GB)**

(74) Representative: **Marchetti, Alessio**
**Bridgestone Europe NV/SA - Italian Branch**
**Technical Center**
**Via del Fosso del Salceto, 13/15**
**00128 Roma (IT)**

(56) References cited:
• CHEN YI ET AL: "Covalently Cross-Linked Elastomers with Self-Healing and Malleable Abilities Enabled by Boronic Ester Bonds", APPLIED MATERIALS & INTERFACES, vol. 10, no. 28, 26 June 2018 (2018-06-26), US, pages 24224 - 24231, XP055974342, ISSN: 1944-8244, DOI: 10.1021/acsami.8b09863
• KEITA G. ET AL: "Viscosity behavior of poly(glyceryl methacrylate) in the presence of borate and phenylboronate ions", JOURNAL OF POLYMER SCIENCE PART B: POLYMER PHYSICS, vol. 33, no. 7, 1 May 1995 (1995-05-01), US, pages 1015 - 1022, XP055974343, ISSN: 0887-6266, DOI: 10.1002/polb.1995.090330704

(52) Cooperative Patent Classification (CPC): (Cont.)

C-Sets
**C08L 7/00, C08L 33/04, C08K 3/22, C08K 5/09,
C08K 3/06, C08K 5/47**

**Description**

The present invention relates to the field of self-healing rubbers. Particularly, the present invention refers to a rubber composition comprising a dynamic poly(glycerol mono-methacrylate) boronic ester complex, processes for preparation thereof, and use thereof in a self-healing tire.

Self-healing natural rubbers are known in the state of the art. C. Xu et. al., "Design of Self-Healing Supramolecular Rubbers by Introducing Ionic Cross-Links into Natural Rubber via a Controller Vulcanization", ACS Appl. Mater. Interfaces 2016, 8, 17728-17737, DOI: 10.1021/acsami.6b05941, describe a controlled peroxide-induced vulcanization to generate ionic crosslinks via polymerization of zinc dimethacrylate in natural rubber. In Ch. Xu et. al., "Self-Healing Natural Rubber with Tailorable Mechanical Properties based Ionic Supramolecular Hybrid Network", ACS Appl. Mater. Interfaces 2017, 9, 29363-29373, DOI: 10.1021/acsami.7b09997, the authors aimed at enhancing the properties of the self-healing natural rubber by an *in-situ* polymerization reaction of excess zinc oxide (ZnO) and methacrylic acid in natural rubber to form zinc dimethacrylate. While self-healing natural rubbers are known from these publications, their mechanical strength is poor.

The use of methacrylate-based macromonomers as "sulfur-free" RAFT agents in a polymerisation-induced self-assembly (PISA) system is described in "Toward Sulfur-Free RAFT Polymerization Induced Self-Assembly" by A. Lotierzo, et al., ACS Macro Lett. 2017, 6, 1438-1443, DOI: 10.1021/acsmacrolett.7b00857. The preparation of polymers containing boronic ester dynamic covalent bonds is described in S. Tajbakhsh, et al., "Recyclable Polymers with Boronic Ester Dynamic Bonds Prepared by Miniemulsion Polymerization", ACS Appl. Polym. Mater. 2021, 3, 3402-3415, DOI: 10.1021/acsapm.1c00368.

Y. Chen et al. describe in "Covalently Cross-Linked Elastomers with Self-Healing and Malleable Abilities Enabled by Boronic Ester Bonds", ACS Appl. Mater. Interfaces 2018, 10, 24224-24231, DOI: 10.1021/acsami.8bo9863, a thiol-containing boronic ester that is used to cross-link a self-healing styrene butadiene rubber (SBR). Furthermore, in "Mechanically Robust, Self-Healable, and Reprocessable Elastomers Enabled by Dynamic Dual Cross-Links", Macromolecules 2019, 52, 3805-3812, DOI: 10.1021/acs.macromol.9boo419, Y. Chen et al. describe the covalent cross-linking of epoxidized natural rubber (ENR) with a boronic ester cross-linker carrying dithiol through a chemical reaction between epoxy and thiol groups.

N. Yang et al., "Polyvinyl Alcohol/Silk Fibroin/Borax Hydrogel Ionotronics: A Highly Stretchable, Self-Healable, and Biocompatible Sensing Platform", ACS Appl. Mater. Interfaces 2019, 11, 23632-23638, DOI: 10.1021/acsami.9b06920, report on a biocompatible ionic hydrogel made of polyvinyl alcohol, silk fibroin, and borax, wherein the hydrogel can be used as a sensing platform for monitoring surrounding body motion.

An object of the present invention was to provide a rubber composition which in its cured state provides improved self-healing properties and simultaneously high mechanical strength, to enable its use in tires.

Surprisingly, it was found that the use of a complex prepared by crosslinking an oligomer or polymer of glycerol mono-methacrylate with borax in a rubber composition solves the trade-off between self-healing efficiency and mechanical strength in the cured rubber. The cured rubber is self-healing and at the same time achieves high mechanical strength, which permits its use in tires.

Accordingly, the present invention refers to a process for preparing a rubber composition comprising at least the following steps:

(A) polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol and preferably a dispersity Đ of equal to or less than 4;

(B) crosslinking the poly(glycerol mono-methacrylate) with borax to obtain a poly(glycerol mono-methacrylate) dynamic boronic ester complex; and

(C) blending the poly(glycerol mono-methacrylate) dynamic boronic ester complex with a vulcanization activator system, a dienic rubber, sulfur, and a vulcanization accelerator, to prepare the rubber composition.

Herein, the term "poly(glycerol monomethacrylate)" or "pGMMA" in abbreviated form means an ω-vinyl oligomer or polymer of glycerol mono-methacrylate. Herein, the term "poly(glycerol monomethacrylate)" is used interchangeably with the term "poly(glycerol monomethacrylate) oligomer".

In a preferred embodiment of the process, in step (A), the molecular weight of the poly(glycerol mono-methacrylate) is controlled by the ratio of glycerol mono-methacrylate to Co(II) complex, in particular wherein a ratio of glycerol mono-methacrylate to Co(II) complex of $10^6 : 10$ to $10^6 : 180$ is used.

In other preferred embodiments of the process, the Co(II) complex is a cobaloxime boron fluoride, in particular the Co(II) complex is bis[(difluoroboryl)-dimethylglyoximato]cobalt(II).

In further preferred embodiments, in step (B) the poly(glycerol mono-methacrylate) is mixed with borax at a weight ratio of from 1.0 : 0.05 to 1.0 : 0.4.

In a preferred embodiment of the process, in step (C), the poly(glycerol mono-methacrylate) boronic ester complex is blended with a vulcanization activator system which is zinc oxide and an organic acid. In a more preferred embodiment, the organic acid used is stearic acid, which forms a vulcanization activator complex with zinc oxide during processing. In another preferred embodiment of the process, the vulcanization activator system is a poly(zinc methacrylate)-zinc oxide activator (p(ZnMA)/ZnO) complex. Preferably, the organic acid used is an ω-vinyl oligomer of methacrylic acid that is mixed with zinc oxide to form a poly(zinc methacrylate)-zinc oxide activator (p(ZnMA)/ZnO) complex, before blending with the dienic rubber, sulfur, and vulcanization accelerator.

In further preferred embodiments, the poly(glycerol mono-methacrylate) has a number average molecular weight ($M_n$) in the range of from 160 to 3200 g/mol, preferably from 320 to 2400 g/mol. In other preferred embodiments, the poly(glycerol mono-methacrylate) has a dispersity Đ of equal to or less than 4, preferably of equal to or less than 2.

In other preferred embodiments, in step (C) the dienic rubber is selected from the group consisting of a natural rubber, an isoprene rubber, a styrene-butadiene rubber, a butadiene rubber, and combinations thereof.

In exemplary embodiments, in step (C) the vulcanization accelerator is based on a sulfenamide compound and/or a thiazole compound.

In other preferred embodiments, in step (C) additionally a filler is used, in particular wherein the filler is used in an amount of an amount of 5.0 to 80 phr, based on 100 phr of the dienic rubber.

The present invention further relates to a rubber composition comprising

- a poly(glycerol mono-methacrylate) dynamic boronic ester complex obtained by polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol, and crosslinking the poly(glycerol mono-methacrylate) with borax;
- a vulcanization activator system;
- a dienic rubber;
- sulfur; and
- a vulcanization accelerator.

A preferred rubber composition of the invention comprises

- a poly(glycerol mono-methacrylate) dynamic boronic ester complex obtained by polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol, and crosslinking the poly(glycerol mono-methacrylate) with borax;
- zinc oxide, and an organic acid, preferably zinc oxide and stearic acid;
- a dienic rubber;
- sulfur; and
- a vulcanization accelerator.

A further preferred rubber composition comprises

- a poly(glycerol mono-methacrylate) dynamic boronic ester complex obtained by polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol, and crosslinking the poly(glycerol mono-methacrylate) with borax;
- a poly(zinc methacrylate)-zinc oxide activator (p(ZnMA)/ZnO) complex;
- a dienic rubber;
- sulfur; and
- a vulcanization accelerator.

In preferred embodiments, the rubber composition comprises a filler, preferably in an amount of 5.0 to 80 phr, based on 100 phr of the dienic rubber.

The present invention further provides a cured rubber or cured rubber composition obtainable by curing the above-described rubber compositions.

Furthermore, the present invention provides a self-healing tire comprising a tire component, preferably a tread, produced by using the above-described rubber compositions.

All references herein to the unit "phr" designate parts by weight per 100 parts by weight of rubber.

The term "molecular weight" as used herein, such as the number average molecular weight ($M_n$), refers to a determination by size exclusion chromatography (SEC), and preferably additionally by $^1$H nuclear magnetic resonance (NMR) spectroscopy.

The term "dispersity" as used herein, refers to the molecular weight distribution Đ and is determined from the following equation:

$$Đ = M_w / M_n$$

wherein $M_w$ is the weight average molecular weight and $M_n$ is the number average molecular weight.

Preferred embodiments of the invention are described in the description hereinafter, in the examples, the figures and the claims.

The Figures show:

Figure 1 shows the reaction scheme for the formation of the dynamic boronic ester complex.

Figure 2 shows curing curves and tensile tests of the cured rubbers of Examples 1 to 4.

Figure 3 shows mechanical properties of the cured rubbers of Examples 1 to 4.

Figure 4 shows DMA analysis of the cured rubbers of Examples 1 to 4.

Figure 5 shows mechanical properties of the cured rubbers of Examples 5 and 6.

Figure 6 shows tensile tests of the cured rubbers of Examples 7 to 9.

The rubber composition according to the present invention is curable and comprises at least a dienic rubber, a poly(glycerol mono-methacrylate) dynamic boronic ester complex, a vulcanization activator system, sulfur, a vulcanization accelerator, and preferably a filler, wherein preferably the vulcanization activator system is zinc oxide (ZnO) and an organic acid. In a preferred embodiment, the organic acid is stearic acid. In another preferred embodiment, the organic acid is an ω-vinyl oligomer of methacrylic acid.

The dienic rubber is preferably selected from natural rubber (NR), styrene-butadiene rubber (SBR), an isoprene rubber, a butadiene rubber (BR), or combinations thereof. Preferably, natural rubber (NR), styrene-butadiene rubber (SBR), or a combination thereof is used. Suitable blends are 80 to 90 weight-% of natural rubber and 20 to 10 weight-% of styrene-butadiene rubber, based on 100 weight-% of the rubber.

According to the invention the poly(glycerol mono-methacrylate) dynamic boronic ester complex has a number average molecular weight ($M_n$) in the range of from 160 to 3200 g/mol, in particular with a dispersity (Đ) of equal to or less than 4. Preferably, $M_n$ is in the range of from 240 to 2400 g/mol with a dispersity (Đ) of equal to or less than 2, more preferably $M_n$ is in the range of from 240 to 1600 with a dispersity (Đ) of less than 2. The molecular weight of 160 to 3200 g/mol corresponds to a degree of polymerization of 2 to 40.

The poly(glycerol mono-methacrylate) is produced by oligomerization or polymerization of glycerol mono-methacrylate by catalytic chain transfer (CCT) using a cobalt (II) complex as catalyst, wherein the degree of the polymerization, or the molecular weight of the poly(glycerol mono-methacrylate) can be controlled by the ratio of the monomer (glycerol mono-methacrylate) and the catalyst.

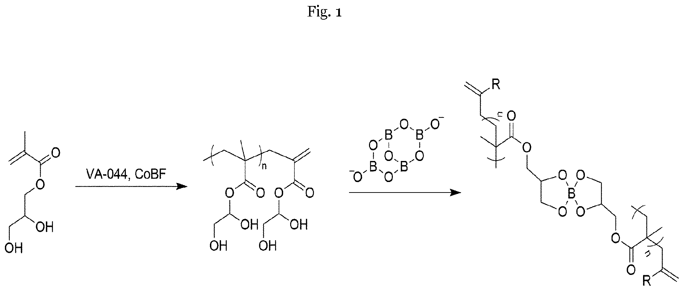

An exemplary embodiment for the polymerization using bis[(difluoroboryl)-dimethylglyoximato]cobalt(II) (CoBF) as catalyst, is shown in Fig. 1, wherein n indicates the number of monomer units. Preferably, n is 2 to 15.

The cobalt(II) complex or catalyst can be any cobalt complex known in the art for catalytic chain transfer polymerization (CCTP). Suitable catalysts are described, for example, in EP 1 295 922 A2, US 9 090 724 B2 and US 9 580 529 B2. Preferably, bis[(difluoroboryl)-dimethylglyoximato]cobalt(II) is used as catalyst.

The poly(glycerol mono-methacrylate) is crosslinked with borax, to yield the dynamic boronic esters, as shown in Fig. 1. The reaction is carried out preferably in deionized water, preferably at ambient temperatures. In a preferred embodiment, the water is then removed by lyophilization.

The poly(glycerol mono-methacrylate) dynamic boronic ester complex contains a network of dynamic boronic esters, that when added to rubber compositions, endow the cured rubbers with self-healing properties.

ZnO is commonly used as an additive in rubber compositions for tires as it acts as a vulcanization accelerator. In a preferred embodiment of the invention, ZnO is added in combination with stearic acid, and forms a zinc stearate salt *in situ*.

In the present invention, ZnO can be used in the form of zinc stearate, or in the form of p(ZnMA)/ZnO. When using p(ZnMA)/ZnO, the complex can be formed prior to mixing by combing ω-unsaturated oligomers of methacrylic acid with ZnO in water and then lyophilizing to form a dry complex.

Suitable fillers for the rubber composition are subject to no restrictions and known in the art of tire production. Exemplary fillers are carbon black, silica, and combinations thereof. Both carbon black and silica with specific surface areas are commercially available and can be used. Fillers are typically used in amounts of 5 phr to 80 phr, preferably of 5 phr to 50 phr, more preferably of 10 phr to 40 phr.

In the present invention, sulfur is used as crosslinking agent in the vulcanization. The sulfur provides covalent crosslinks in the cured rubber composition contributing to the mechanical strength of the cured rubber.

Suitable vulcanization accelerators are based on sulfenamide compounds and/or thiazole compounds. Preferably, N-cyclohexyl-2-benzothiazole sulfenamide (known as CBS) or tetramethylthiuram monosulfide is used.

The rubber composition can comprise further additives, in particular additives that are commonly used in the art for tire production. Such additives are lubricants, pigments, activators, softeners, plasticizers, antioxidants, fatty acids (such as stearic acid). Commonly, the total amount of these additives is not more than 10 weight-% based on the 100 weight-% of the rubber composition or not more than 10 phr.

The invention also provides cured rubber compositions or cured rubbers obtained after curing of the curable rubber compositions of the invention. The curing can be carried out as known in the art and is subject to no restrictions. Suitable curing temperatures are in the range of from 150 to 160 °C.

The rubber composition of the invention is particularly used for producing one or more tire components or one or more rubber components of a self-healing tire, including tread or case compounds. In particular, the rubber composition is preferably used for the tread or tread portion of a self-healing tire. Thus, the invention further provides self-healing tires comprising a tire component, more preferably a tread, that is produced by using the self-healing rubber composition of the invention. The production of tire components from the rubber composition in suitable devices is carried out as known in the art.

The rubber composition of the invention imparts self-healing properties and high mechanical strength to the tire.

The examples hereinafter illustrate the invention without restricting the scope of protection.

## Examples

### Examples 1 to 4

The Examples 1 to 4 refer to different rubber compositions which show the effect of poly(glycerol mono-methacrylate) dynamic boronic ester complex on the self-healing and mechanical properties of the rubber after curing.

The formulations used are indicated in Table 1 below, wherein the numerical values relate to phr. The comparative formulation was CV1 which contained no pGMMA-Borax but otherwise the same components in the corresponding amounts.

Table 1:

|  | CV1 | CV1 PG10 | CV1 PG15 | CV1 PG20 |
|---|---|---|---|---|
| NR | 100 | 100 | 100 | 100 |
| ZnO | 5 | 5 | 5 | 5 |
| Stearic Acid | 1 | 1 | 1 | 1 |
| pGMMA-Borax | - | 10 | 15 | 20 |
| CBS | 0.14 | 0.14 | 0.14 | 0.14 |
| Sulfur | 0.7 | 0.7 | 0.7 | 0.7 |

The indicated components were as follows.

NR: natural rubber.

pGMMA-borax: poly(glycerol mono-methacrylate) dynamic boronic ester complex prepared from poly(glycerol mono-methacrylate ($M_n$ = 1600 g/mol) and borax at a weight ratio of 10 to 1.

CBS: N-cyclohexyl-2-benzothiazole sulfonamide.

Sulfur: commercially available sulfur for tire production.

The components as indicated were blended in a Haake PolyLab twin screw compounder at 40 °C and at 50 rpm. The curing properties and optimum curing time ($t_{90}$) of the compounds were measured using a Montech M3000 moving die rheometer (MDR). Samples were then cured to their $t_{90}$ curing time, at a temperature of 150 °C at a pressure of 150 bar in a Collin P200 Hot Press to form $9 \times 9$ cm$^2$ films with a thickness of 1 mm.

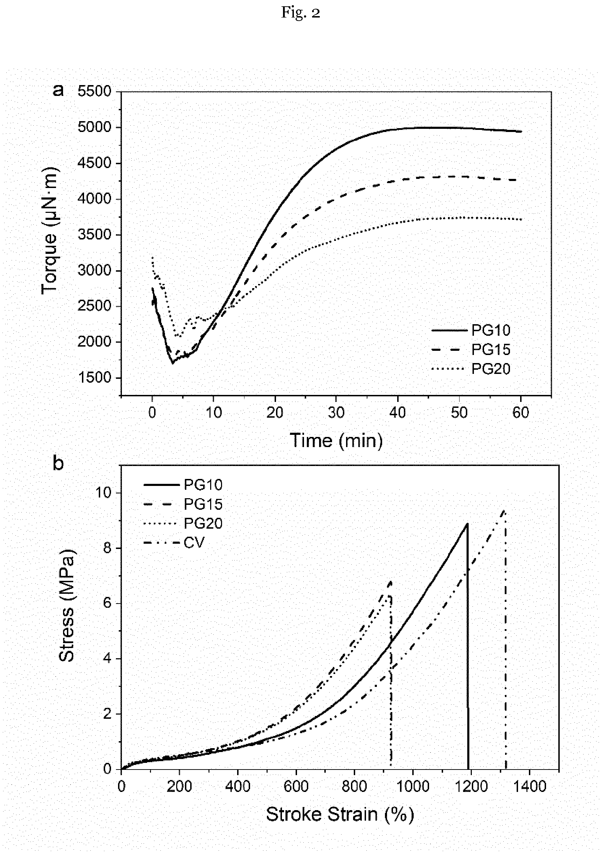

Fig. 2 shows (a) curing curves obtained with the MDR for the formulations of Table 1, and (b) tensile tests of CV1 and the formulations of Table 1. The mechanical properties were evaluated by measuring stress (MPa) vs. stroke strain (%) on a Shimadzu AGS-X tensile tester at a strain rate of 100 mm/min. The results are shown in Fig. 2 in comparison with a formulation (CV1) without pGMMA-borax.

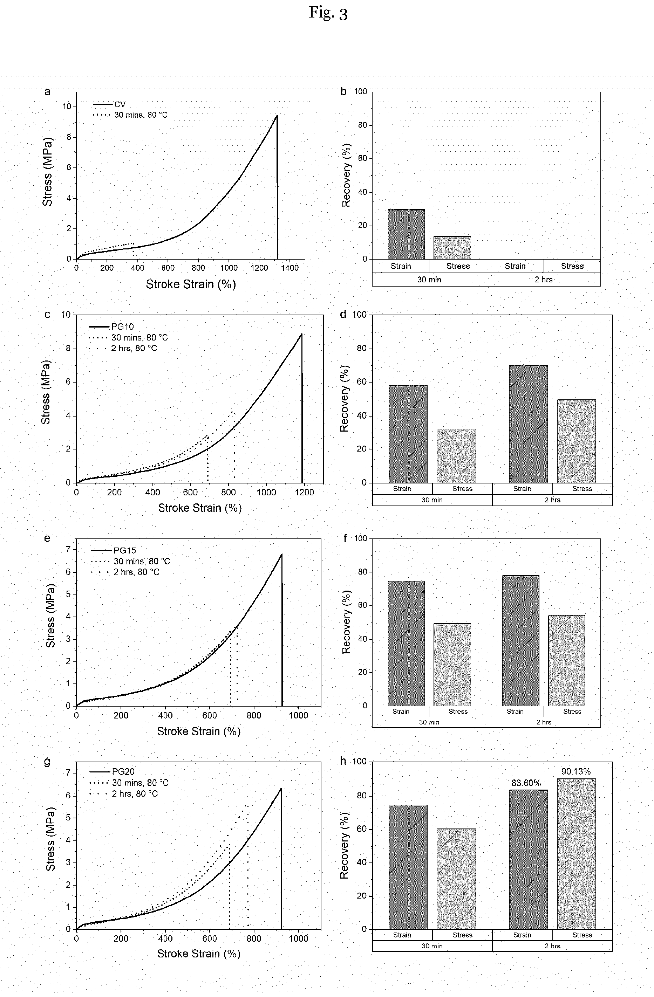

Fig. 3 further shows self-healing tests in terms of recovery in %. These results were obtained by repeating the tensile tests with specimens from each sample that had been cut in half with a scalpel and then overlapped with an area of 4 mm $\times$ 3 mm, before being placed under a 20 N weight at 80 °C for either 30 mins or 2 hours. The percentage recovery value was then calculated from the values obtained from the cut specimens relative to the uncut specimens.

The values for the stress recovery and strain recovery of the cured rubbers of Examples 1 to 4 are shown in Table 2 below.

Table 2:

|  | CV | PG10 | PG15 | PG20 |
|---|---|---|---|---|
| pGMMA-borax (phr) | 0 | 10 | 15 | 20 |
| Stress recovery @ 30 mins (%) | 13.70 | 32.16 | 49.35 | 60.29 |
| Strain recovery @ 30 mins (%) | 29.76 | 58.18 | 74.79 | 74.58 |
| Stress recovery @ 2 hrs (%) | - | 49.4 | 54.21 | 90.13 |
| Strain recovery @ 2 hrs (%) | - | 70 | 78.05 | 83.60 |

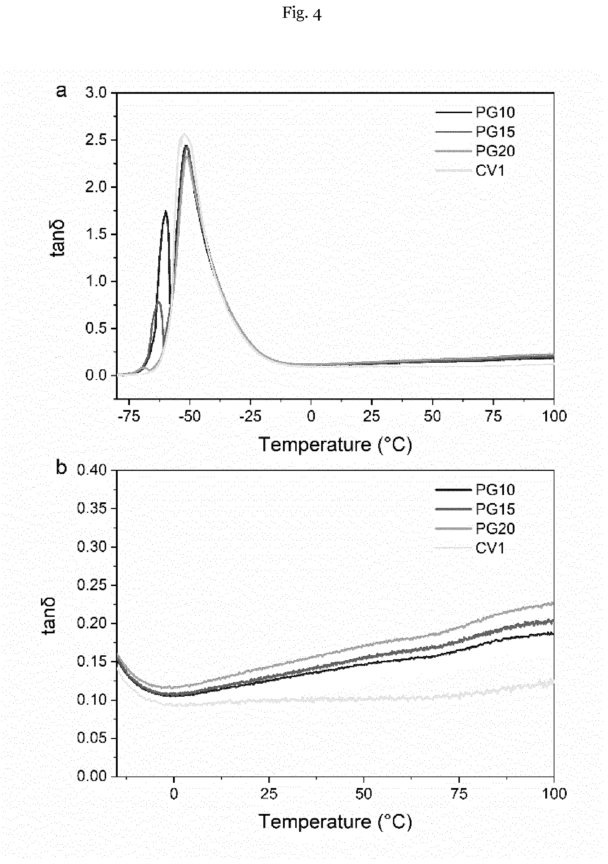

Fig. 4 shows a DMA analysis of CV1 and the formulations of Table 1. These results were measured on a Tritec 2000 DMA in tension mode at a 1% strain and a frequency of 5 Hz, in the temperature range of -80 and 100 °C

## Examples 5 and 6

The Examples 5 and 6 refer to rubber compositions showing the effect of pGMMA-borax on a rubber composition containing additionally pZnMA/ZnO salt (which is a preformed salt of pMAA with ZnO in a weight ratio of 1:1) as the curing activator. The formulations used are shown in Table 3 below.

Table 3:

|  | PG5-pZnMA |
|---|---|
| NR | 100 |
| pZnMA/ZnO | 15 |
| pGMMA-Borax | 5 |
| CBS | 0.14 |
| Sulfur | 0.7 |

The components as indicated were blended in the same manner as described for Examples 1 to 4.

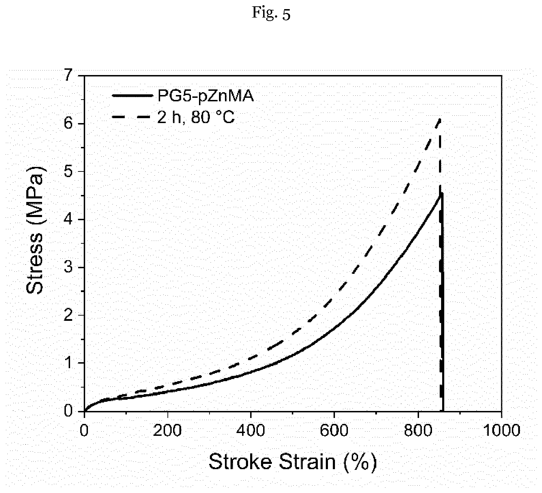

The mechanical properties were evaluated by measuring stress (MPa) vs. stroke strain (%) on a Shimadzu AGS-X tensile tester at a strain rate of 100 mm/min. The results are shown in Fig. 5.

## Examples 7 to 9

The examples 7 to 9 refer to rubber compositions that show the effect of adding carbon black N234 to compound PG20, as given in Examples 1 to 4. The detailed compositions are given in Table 4.

Table 4:

|  | PG20 CB10 | PG20 CB25 | PG20 CB40 |
| --- | --- | --- | --- |
| NR | 100 | 100 | 100 |
| ZnO | 5 | 5 | 5 |
| Stearic Acid | 1 | 1 | 1 |
| pGMMA-Borax | 20 | 20 | 20 |
| CBS | 0.14 | 0.14 | 0.14 |
| Sulfur | 0.7 | 0.7 | 0.7 |
| CB N234 | 10 | 25 | 40 |

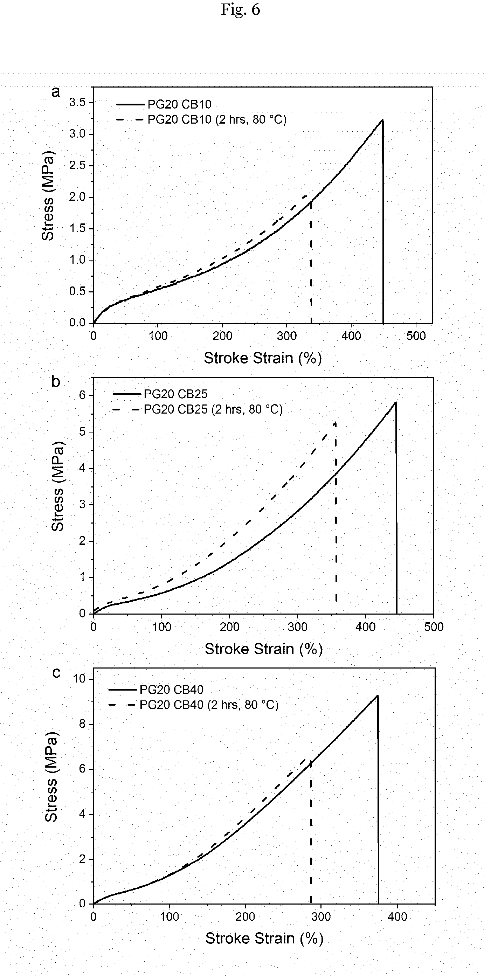

The components given in Table 4 were blended as described in Examples 1 to 4. Their mechanical properties were again evaluated by measuring stress (MPa) vs. stroke strain (%) on a Shimadzu AGS-X tensile tester at a strain rate of 100 mm/min. The results are shown in Fig. 6. Additionally, self-healing efficiencies were evaluated using the same method as described in Examples 1 to 4 and are given in Table 5.

Table 5:

|  | PG20 CB10 | PG20 CB25 | PG20 CB40 |
| --- | --- | --- | --- |
| pGMMA-borax (phr) | 20 | 20 | 20 |
| CB N234 (phr) | 10 | 25 | 40 |
| Stress recovery @ 2 hrs (%) | 63.79 | 90.35 | 71.73 |
| Strain recovery @ 2 hrs (%) | 75.22 | 80.18 | 76.20 |

The results obtained show that the addition of the dynamic boronic ester complexes has a beneficial effect on the self-healing and mechanical properties of the cured rubbers.

## Claims

1.  A process for preparing a rubber composition comprising at least the following steps:

    (A) polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol and preferably a dispersity Đ of equal to or less than 4;
    (B) crosslinking the poly(glycerol mono-methacrylate) with borax to obtain a poly(glycerol mono-methacrylate) dynamic boronic ester complex; and
    (C) blending the poly(glycerol mono-methacrylate) dynamic boronic ester complex with a vulcanization activator system, a dienic rubber, sulfur, and a vulcanization accelerator, to prepare the rubber composition.

2.  The process of claim 1, wherein, in step (A), the molecular weight of the poly(glycerol mono-methacrylate) is controlled by the ratio of glycerol mono-methacrylate to Co(II) complex, in particular wherein a ratio of glycerol mono-methacrylate to Co(II) complex of $10^6$ : 10 to $10^6$ : 180 is used.

3.  The process of claim 1 or 2, wherein the Co(II) complex is a cobaloxime boron fluoride, in particular wherein the Co(II) complex is bis[(difluoroboryl)-dimethylglyoximato]cobalt(II).

4.  The process of any one of claims 1 to 3, wherein, in step (B), the poly(glycerol mono-methacrylate) is mixed with borax at a weight ratio of 1.0 : 0.05 to 1.0 : 0.4.

5.  The process of any one of claims 1 to 4, wherein, in step (C), the vulcanization activator system is zinc oxide and an organic acid, preferably the vulcanization activator system is zinc oxide and stearic acid.

6. The process of any one of claims 1 to 4, wherein, in step (C), the vulcanization activator system is a poly(zinc methacrylate)-zinc oxide (p(ZnMA)/ZnO) complex.

7. The process of any one of claims 1 to 6, wherein, in step (C), the dienic rubber is selected from the group consisting of a natural rubber, an isoprene rubber, a styrene-butadiene rubber, a butadiene rubber, and combinations thereof.

8. The process of any one of claims 1 to 7, wherein, in step (C), the amount of the poly(glycerol mono-methacrylate) dynamic boronic ester complex is 5.0 to 40 phr, based on 100 phr of the dienic rubber.

9. The process of any one of claims 1 to 8, wherein, in step (C), additionally a filler is used, in particular wherein the filler is used in an amount of 5.0 to 80 phr, based on 100 phr of the dienic rubber.

10. A rubber composition comprising:

- a poly(glycerol mono-methacrylate) dynamic boronic ester complex obtained by polymerizing glycerol mono-methacrylate in the presence of a Co(II) complex as catalytic chain transfer agent, to obtain a poly(glycerol mono-methacrylate) being an oligomer or polymer of glycerol mono-methacrylate and having a number average molecular weight ($M_n$) in the range of from 160 to 3200 g/mol, and crosslinking the poly(glycerol mono-methacrylate) with borax;
- a vulcanization activator system;
- a dienic rubber;
- sulfur; and
- a vulcanization accelerator.

11. The rubber composition of claim 10, wherein the vulcanization activator system is zinc oxide and an organic acid, preferably the vulcanization activator system is zinc oxide and stearic acid.

12. The rubber composition of claim 10, wherein the vulcanization activator system is a poly(zinc methacrylate)-zinc oxide (p(ZnMA)/ZnO) complex.

13. The rubber composition of any one of claims 10 to 12, wherein the rubber composition additionally comprises a filler, in particular in an amount of 5.0 to 80 phr, based on 100 phr of the dienic rubber.

14. A cured rubber composition obtainable by curing a rubber composition prepared by a process as defined in any one of claims 1 to 9, or a rubber composition according to any one of claims 10 to 13.

15. A self-healing tire comprising a tire component, preferably a tread, prepared by using a rubber composition prepared by a process as defined in any one of claims 1 to 9, or a rubber composition according to any one of claims 10 to 13.

**Patentansprüche**

1. Verfahren zum Herstellen einer Kautschukzusammensetzung umfassend mindestens die folgenden Schritte:

(A) Polymerisieren von Glycerinmonomethacrylat in Gegenwart eines Co(II)-Komplex als katalytisches Kettenübertragungsmittel, um ein Poly(glycerinmonomethacrylat) zu erhalten, das ein Oligomer oder Polymer von Glycerinmonomethacrylat ist und ein zahlenmittleres Molekulargewicht ($M_n$) in dem Bereich von 160 bis 3200 g/mol und vorzugsweise eine Dispersität Đ von gleich oder kleiner als 4 aufweist;
(B) Vernetzen des Poly(glycerinmonomethacrylats) mit Borax, um einen dynamischen Poly(glycerinmonomethacrylat)-Boronsäureesterkomplex zu erhalten; und
(C) Mischen des dynamischen Poly(glycerinmonomethacrylat)-Boronsäureesterkomplexes mit einem Vulkanisationsaktivatorsystem, einem Dienkautschuk, Schwefel und einem Vulkanisationsbeschleuniger, um die Kautschukzusammensetzung herzustellen.

2. Verfahren nach Anspruch 1, wobei, in Schritt (A) das Molekulargewicht des Poly(glycerinmonomethacrylats) durch das Verhältnis von Glycerinmonomethacrylat zu dem Co(II)-Komplex gesteuert wird, insbesondere wobei ein Verhältnis von Glycerinmonomethacrylat zu dem Co(II)-Komplex von $10^6 : 10$ bis $10^6 : 180$ verwendet wird.

3. Verfahren nach Anspruch 1 oder 2, wobei der Co(II)-Komplex ein Cobaloxim-Borfluorid ist, insbesondere wobei der Co(II)-Komplex Bis[(difluoroboryl)-dimethylglyoximato]cobalt(II) ist.

4. Verfahren nach einem der Ansprüche 1 bis 3, wobei in Schritt (B) das Poly(glycerinmonomethacrylat) mit Borax in einem Gewichtsverhältnis von 1,0 : 0,05 bis 1,0 : 0,4 gemischt wird.

5. Verfahren nach einem der Ansprüche 1 bis 4, wobei in Schritt (C) das Vulkanisationsaktivatorsystem Zinkoxid und eine organische Säure ist, vorzugsweise das Vulkanisationsaktivatorsystem Zinkoxid und Stearinsäure ist.

6. Verfahren gemäß einem der Ansprüche 1 bis 4, wobei in Schritt (C) das Vulkanisationsaktivatorsystem ein Poly(zinkmethacrylat)-Zinkoxid(p(ZnMA)/ZnO)-Komplex ist.

7. Verfahren nach einem der Ansprüche 1 bis 6, wobei in Schritt (C) der Dienkautschuk aus der Gruppe ausgewählt ist, bestehend aus einem Naturkautschuk, einem Isoprenkautschuk, einem Styrol-Butadienkautschuk, einem Butadienkautschuk und Kombinationen davon.

8. Das Verfahren gemäß einem der Ansprüche 1 bis 7, wobei in Schritt (C) die Menge des dynamischen Poly(glycerinmonomethacrylat)-Boronsäureesterkomplexes 5,0 bis 40 phr, bezogen auf 100 phr des Dienkautschuks, beträgt.

9. Verfahren nach einem der Ansprüche 1 bis 8, wobei in Schritt (C) zusätzlich ein Füllstoff verwendet wird, insbesondere wobei der Füllstoff in einer Menge von 5,0 bis 80 phr, bezogen auf 100 phr des Dienkautschuks, verwendet wird.

10. Kautschukzusammensetzung, umfassend:

- ein dynamischer Poly(glycerinmonomethacrylat)-Boronsäureesterkomplex, der durch Polymerisation von Glycerinmonomethacrylat in Gegenwart eines Co(II)-Komplex als katalytisches Kettenübertragungsmittel, um ein Poly(glycerinmonomethacrylat) zu erhalten, das ein Oligomer oder Polymer von Glycerinmonomethacrylat ist und ein zahlenmittleres Molekulargewicht ($M_n$) in dem Bereich von 160 bis 3200 g/mol aufweist, und das Poly(glycerinmonomethacrylat) mit Borax vernetzt;
- ein Vulkanisationsaktivatorsystem;
- einen Dienkautschuk;
- Schwefel; und
- einen Vulkanisationsbeschleuniger.

11. Kautschukzusammensetzung nach Anspruch 10, wobei das Vulkanisationsaktivatorsystem Zinkoxid und eine organische Säure ist, vorzugsweise das Vulkanisationsaktivatorsystem Zinkoxid und Stearinsäure ist.

12. Kautschukzusammensetzung nach Anspruch 10, wobei das Vulkanisationsaktivatorsystem ein Poly(zinkmethacrylat)-Zinkoxid(p(ZnMA)/ZnO)-Komplex ist.

13. Kautschukzusammensetzung nach einem der Ansprüche 10 bis 12, wobei die Kautschukzusammensetzung zusätzlich einen Füllstoff umfasst, insbesondere in einer Menge von 5,0 bis 80 phr, bezogen auf 100 phr des Dienkautschuks.

14. Vulkanisierte Kautschukzusammensetzung, erhältlich durch Vulkanisieren einer Kautschukzusammensetzung, die durch ein Verfahren nach einem der Ansprüche 1 bis 9 hergestellt wird, oder einer Kautschukzusammensetzung nach einem der Ansprüche 10 bis 13.

15. Selbstheilender Reifen, umfassend eine Reifenkomponente, vorzugsweise eine Lauffläche, die durch Verwenden einer Kautschukzusammensetzung hergestellt wird, die durch ein Verfahren nach einem der Ansprüche 1 bis 9 oder einer Kautschukzusammensetzung nach einem der Ansprüche 10 bis 13 hergestellt wird.

**Revendications**

1. Procédé de préparation d'une composition de caoutchouc comprenant au moins les étapes suivantes :

(A) polymérisation de mono-méthacrylate de glycérol en présence d'un complexe de Co(II) comme agent catalytique de transfert de chaîne, pour obtenir un poly(mono-méthacrylate de glycérol) qui est un oligomère ou polymère de mono-méthacrylate de glycérol et ayant une masse moléculaire moyenne en nombre ($M_n$) comprise dans la plage allant de 160 à 3200 g/mol et, de préférence, une dispersité Đ égale ou inférieure à 4 ;
(B) réticulation du poly(mono-méthacrylate de glycérol) avec du borax pour obtenir un complexe d'ester boronique dynamique de poly(mono-méthacrylate de glycérol) ; et
(C) mélange du complexe d'ester boronique dynamique de poly(mono-méthacrylate de glycérol) avec un système activateur de vulcanisation, un caoutchouc diénique, du soufre, et un accélérateur de vulcanisation, pour préparer la composition de caoutchouc.

2. Procédé selon la revendication 1, dans lequel, à l'étape (A), la masse moléculaire du poly(mono-méthacrylate de glycérol) est régulée par le rapport du mono-méthacrylate de glycérol au complexe de Co(II), en particulier dans lequel un rapport du mono-méthacrylate de glycérol au complexe de Co(II) de $10^6$: 10 à $10^6$: 180 est utilisé.

3. Procédé selon la revendication 1 ou 2, dans lequel le complexe de Co(II) est un fluorure de bore cobaloxime, en particulier dans lequel le complexe de Co(II) est le bis[(difluoroboryl)-diméthylglyoximato]cobalt(II).

4. Procédé selon l'une quelconque des revendications 1 à 3, dans lequel, à l'étape (B), le poly(mono-méthacrylate de glycérol) est mélangé avec du borax à un rapport en poids de 1,0: 0,05 à 1,0: 0,4.

5. Procédé selon l'une quelconque des revendications 1 à 4, dans lequel, à l'étape (C), le système activateur de vulcanisation est constitué d'oxyde de zinc et d'un acide organique, de préférence le système activateur de vulcanisation est constitué d'oxyde de zinc et d'acide stéarique.

6. Procédé selon l'une quelconque des revendications 1 à 4, dans lequel, à l'étape (C), le système activateur de vulcanisation est un complexe poly(méthacrylate de zinc)-oxyde de zinc (p(ZnMA)/ZnO).

7. Procédé selon l'une quelconque des revendications 1 à 6, dans lequel, à l'étape (C), le caoutchouc diénique est choisi dans le groupe constitué d'un caoutchouc naturel, d'un caoutchouc isoprène, d'un caoutchouc styrène-butadiène, d'un caoutchouc butadiène, et de leurs combinaisons.

8. Procédé selon l'une quelconque des revendications 1 à 7, dans lequel, à l'étape (C), la quantité du complexe d'ester boronique dynamique de poly(glycérol mono-méthacrylate) est de 5,0 à 40 pce, sur la base de 100 pce du caoutchouc diénique.

9. Procédé selon l'une quelconque des revendications 1 à 8, dans lequel, à l'étape (C), en outre, une charge est utilisée, en particulier dans lequel la charge est utilisée en une quantité de 5,0 à 80 pce, sur la base de 100 pce du caoutchouc diénique.

10. Composition de caoutchouc comprenant :

- un complexe d'ester boronique dynamique de poly(glycérol mono-méthacrylate) obtenu par polymérisation de mono-méthacrylate de glycérol en présence d'un complexe de Co(II) comme agent catalytique de transfert de chaîne, pour obtenir un poly(mono-méthacrylate de glycérol) qui est un oligomère ou polymère de mono-méthacrylate de glycérol et ayant une masse moléculaire moyenne en nombre ($M_n$) comprise dans la plage allant de 160 à 3 200 g/mol, et par réticulation du poly(mono-méthacrylate de glycérol) avec du borax ;
- un système activateur de vulcanisation ;
- un caoutchouc diénique ;
- du soufre ; et
- un accélérateur de vulcanisation.

11. Composition de caoutchouc selon la revendication 10, dans laquelle le système activateur de vulcanisation est constitué d'oxyde de zinc et d'un acide organique, de préférence le système activateur de vulcanisation est constitué d'oxyde de zinc et d'acide stéarique.

12. Composition de caoutchouc selon la revendication 10, dans laquelle le système activateur de vulcanisation est un complexe de poly(méthacrylate de zinc)-oxyde de zinc (p(ZnMA)/ZnO).

13. Composition de caoutchouc selon l'une quelconque des revendications 10 à 12, dans laquelle la composition de

EP 4 293 076 B1

caoutchouc comprend en outre une charge, en particulier en une quantité de 5,0 à 80 pce, sur la base de 100 pce du caoutchouc diénique.

14. Composition de caoutchouc durcie pouvant être obtenue par durcissement d'une composition de caoutchouc préparée par un procédé tel que défini dans l'une quelconque des revendications 1 à 9, ou d'une composition de caoutchouc selon l'une quelconque des revendications 10 à 13.

15. Pneumatique auto-cicatrisant comprenant un composant de pneumatique, de préférence une bande de roulement, préparé à l'aide d'une composition de caoutchouc préparée par un procédé tel que défini dans l'une quelconque des revendications 1 à 9, ou d'une composition de caoutchouc selon l'une quelconque des revendications 10 à 13.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1295922 A2
- US 9090724 B2
- US 9580529 B2

**Non-patent literature cited in the description**

- **C. XU**. Design of Self-Healing Supramolecular Rubbers by Introducing Ionic Cross-Links into Natural Rubber via a Controller Vulcanization. *ACS Appl. Mater. Interfaces*, 2016, vol. 8, 17728-17737
- **XU**. Self-Healing Natural Rubber with Tailorable Mechanical Properties based Ionic Supramolecular Hybrid Network. *ACS Appl. Mater. Interfaces*, 2017, vol. 9, 29363-29373
- **A. LOTIERZO et al.** Toward Sulfur-Free RAFT Polymerization Induced Self-Assembly. *ACS Macro Lett.*, 2017, vol. 6, 1438-1443
- **S. TAJBAKHSH et al.** Recyclable Polymers with Boronic Ester Dynamic Bonds Prepared by Miniemulsion Polymerization. *ACS Appl. Polym. Mater.*, 2021, vol. 3, 3402-3415
- **Y. CHEN et al.** Covalently Cross-Linked Elastomers with Self-Healing and Malleable Abilities Enabled by Boronic Ester Bonds. *ACS Appl. Mater. Interfaces*, 2018, vol. 10, 24224-24231
- Mechanically Robust, Self-Healable, and Reprocessable Elastomers Enabled by Dynamic Dual Cross-Links. *Macromolecules*, 2019, vol. 52, 3805-3812
- **N. YANG et al.** Polyvinyl Alcohol/Silk Fibroin/Borax Hydrogel Ionotronics: A Highly Stretchable, Self-Healable, and Biocompatible Sensing Platform. *ACS Appl. Mater. Interfaces*, 2019, vol. 11, 23632-23638